# NOUVEAU FASCICULE DE BREVET EUROPEEN

(11) **EP 0 468 864 B2**
(45) Date de publication et mention de la décision concernant l'opposition: **19.07.2000**
(45) Mention de la délivrance du brevet: 20.09.1995
(21) Numéro de dépôt: 91402014.4
(22) Date de dépôt: 18.07.1991
(51) Int. Cl.: B32B 15/08, B32B 27/36, B65D 65/40

(54) **Film d'emballage complexé imprimé, procédé de réalisation d'un tel film, opercule mettant en oeuvre un tel film et conteneur comportant un tel opercule**
Vielschichtig bedruckter Verpackungsfilm, Verfahren zur Herstellung eines solchen Films, Deckel, der einen solchen Film gebraucht und Behälter mit diesem Deckel
Complex printed packaging film, method of making such a film, cover using such a film and container with such a cover

(30) Priorité: 25.07.1990 FR 9009500
(43) Date de publication de la demande: 29.01.1992
(73) Titulaire: DANISCO FLEXIBLE FRANCE, 16300 Barbezieux St Hilaire (FR)
(72) Inventeur: Rauturier, Michel, F-16300 Salles de Barbezieux (FR); Provost, Jean-Jacques, F-16300 Barret (FR)
(74) Mandataire: Moncheny, Michel

(56) Documents cités:
- EP-A- 0 125 107
- EP-A- 0 223 253
- EP-A- 0 358 445
- DE-A- 3 005 051
- DE-A- 3 416 750
- DE-A- 3 803 850
- FR-A- 2 620 094
- JP-A- 61 135 782
- US-A- 4 092 449
- Verpackungs-Handbuch, Ausgabe 1981/82, Verlag für Chemische Industrie H. Ziolkowsky KG, Augsburg, Seiten 34-37, 242-245

## Description

L'invention concerne un film d'emballage complexé imprimé, un procédé de réalisation d'un tel film, un opercule mettant en oeuvre un tel film et un conteneur comportant un tel opercule.

On utilise couramment pour l'emballage de denrées alimentaires (tels que produits lactés, laitiers, sucrés, fromagers, charcutiers, surgelés, légumes, etc...), ou autres produits, des conteneurs comportant un récipient tel qu'un pot ou une barquette en matière plastique et un opercule de fermeture associé au récipient mais amovible (par arrachage, fracture ou autre). Un cas typique, bien que non limitatif, est celui de l'emballage de produits lactés frais (tels que des yaourts, laits fermentés ou crèmes). Dans ce cas l'opercule peut être thermoscellé au récipient et comporte le plus souvent, du côté de sa face visible extérieure (recto), des impressions décoratives, publicitaires ou informatives. Un tel opercule comprend, par exemple, un film support polyester ; sur la face de celui-ci côté verso (vers l'intérieur du conteneur) une couche de vernis thermoscellable ; et sur la face côté recto, successivement, une couche de métal, une couche de colle assurant le contre-collage avec une couche de papier lequel est revêtu d'une couche d'encre d'impression et d'un vernis de protection.

On peut se référer par exemple aux documents FR-A-2 557 542 et US-A-4 412 487.

Ainsi les opercules du type considéré précédemment ne comportent pas d'impression visible côté verso. Outre que la face côté verso est celle qui est invisible tant que le conteneur n'a pas été ouvert, la réalisation d'une impression visible côté verso -en présence d'une autre impression visible côté recto- a été jusqu'à présent écartée pour de nombreuses raisons parmi lesquelles : les recommandations des professionnels compétents. Ainsi L'ASSOCIATION FRANÇAISE DES FABRICANTS D'ENCRES D'IMPRIMERIE écrit en octobre 1989 "L'utilisation des encres au verso des emballages au contact direct des denrées alimentaires est fortement déconseillée" ; les phénomènes de migration ou contamination ayant l'encre pour origine ; la difficulté de concevoir des opercules imprimés différemment au recto et au verso.

L'invention vise donc à résoudre le problème de l'impression visible au recto et au verso de tels opercules ou, plus généralement, de films d'emballage complexés ou non.

A cet effet, l'invention propose, tout d'abord, un film d'emballage complexé imprimé, caractérisé par le fait qu'il comporte l'association : d'un film polyester transparent ; d'une première couche d'encres d'impression et d'un vernis de protection sur une première face du film polyester ; d'une couche de métal sur la première couche d'encres d'impression ; d'une seconde couche d'encres d'impression et d'un vernis de protection sur la couche de métal à l'opposé de la première couche d'encres d'impression et de vernis.

Selon une première variante de réalisation, le film est constitué en outre d'une couche de vernis thermoscellable sur polystyrène, PVC, polypropylène, polyester associée à la seconde face du film polyester, la seconde couche d'encres et vernis étant en contact direct avec la couche de métal déposée par métallisation sous vide.

Selon une seconde variante de réalisation, le film est constitué en outre d'une couche de vernis thermoscellable sur polystyrène, PVC, polypropylène, polyester associée à la seconde face du film polyester, la seconde couche d'encres et vernis étant associée à la couche de métal déposée par métallisation sous vide par une couche intermédiaire en papier ou en matière plastique au moyen d'une couche de colle.

L'invention propose ensuite une première variante de procédé de réalisation de tels films comportant les étapes successives suivantes :
- on imprime le film polyester avec de l'encre puis on dépose sur l'encre le vernis protecteur par héliogravure ou flexographie ;
- on dépose la couche de métal par métallisation sous vide sur l'encre et le vernis ;
- on imprime la couche de métal avec de l'encre puis on dépose sur l'encre le vernis protecteur par héliogravure.

Et, selon une seconde variante de réalisation, le procédé comporte les étapes successives suivantes :
- on imprime le film polyester avec de l'encre puis on dépose sur l'encre le vernis protecteur par héliogravure ou flexographie ;
- on dépose la couche de métal par métallisation sous vide sur l'encre et le vernis ;
- on réalise un complexage par contre-collage avec une couche intermédiaire ;
- on imprime la couche intermédiaire avec de l'encre puis on dépose sur l'encre le vernis protecteur par héliogravure.

L'invention propose, enfin, un opercule de fermeture réalisé à partir d'un tel film et un conteneur incorporant un tel opercule.

La mise en oeuvre de l'invention permet de réaliser des films d'emballage imprimés sur les deux faces recto et verso, les impressions étant visibles côté recto et côté verso. De tels films d'emballage peuvent être mis en oeuvre pour l'obtention d'opercules incorporés à des conteneurs sur des récipients tels que pots ou barquettes auxquels ils sont associés rigidement notamment par thermoscellage. Le film tel qu'il est considéré ici est le produit fini et celui-ci est lui-même plus ou moins complexé.

L'impression sur les faces recto et verso (c'est-à-dire visible depuis le recto et le verso) permet de doubler la surface d'impression ce qui est particulièrement utile lorsque l'on sait la quantité d'informations à communiquer. De plus, l'impression sur la face verso qui est normalement cachée, tant que l'opercule n'est pas ouvert, présente de nombreux avantages : elle présente un agrément pour l'utilisateur par rapport à des opercules dont la face verso n'est pas imprimée. Elle permet de ne faire découvrir un message qu'au moment même de l'ouverture du conteneur. A ce titre, cette technique peut être mise en oeuvre à l'occasion de jeux, concours, etc...

Les autres caractéristiques et avantages de l'invention résulteront de la description qui suivra en référence aux dessins annexés dans lesquels :
- Les figures 1 à 3 sont trois vues schématiques, en coupe axiale, illustrant trois variantes indicatives et non limitatives de films d'emballage complexés imprimés selon l'invention.
- La figure 4 est une vue schématique, en coupe, d'un conteneur incorporant un opercule réalisé à partir d'un tel film.

L'invention concerne un film d'emballage complexé imprimé 1 tout spécialement destiné à la réalisation d'un opercule de fermeture 2 pour un récipient 3 tel qu'un pot ou barquette en matière plastique pourvu d'une collerette 4 à laquelle l'opercule 2 est associé rigidement mais d'une manière autorisant l'ouverture, notamment par arrachage. A cet effet, l'opercule 2 peut être thermoscellé à la collerette 4.

L'opercule 2 comporte des impressions visibles du côté de ses faces extérieure ou recto 5 et intérieure ou verso 6 étant donné que le film d'emballage 1 à partir duquel il est réalisé est lui-même imprimé pour être visible au recto et au verso.

Le film d'emballage imprimé 1 comporte plusieurs couches de matériaux associées entre elles pour former un tout structurel monobloc.

A cet effet, le film d'emballage complexé imprimé 1 comporte l'association d'un film polyester transparent 7 ; d'une première couche d'encres d'impression et d'un vernis de protection 8 sur une première face 9 du film polyester 7 ; d'une couche de métal 10 sur la première couche d'encres et d'impression 8 ; d'une seconde couche d'encres d'impression et d'un vernis de protection 11 sur la couche de métal 10 à l'opposé de la première couche d'encres d'impression et de vernis 8.

Il doit être ici entendu que la notion de "couche" est celle couramment utilisée par l'homme du métier dans le domaine des films d'emballage complexes. Une couche au sens de la présente description est elle-même unique ou multiple, homogène ou complexe.

La préposition "sur" utilisée pour qualifier qu'une couche est "sur" une autre permet de repérer la position relative de ces deux couches. Par contre, la préposition "sur" ne signifie pas nécessairement que les deux couches sont en contact l'une sur l'autre ou associées directement l'une à l'autre.

Dans les trois variantes de réalisation représentées sur les figures, la première couche d'encres et vernis 8 est en contact sur le film polyester 7 et la couche de métal 10 est en contact sur la première couche d'encres et vernis 8.

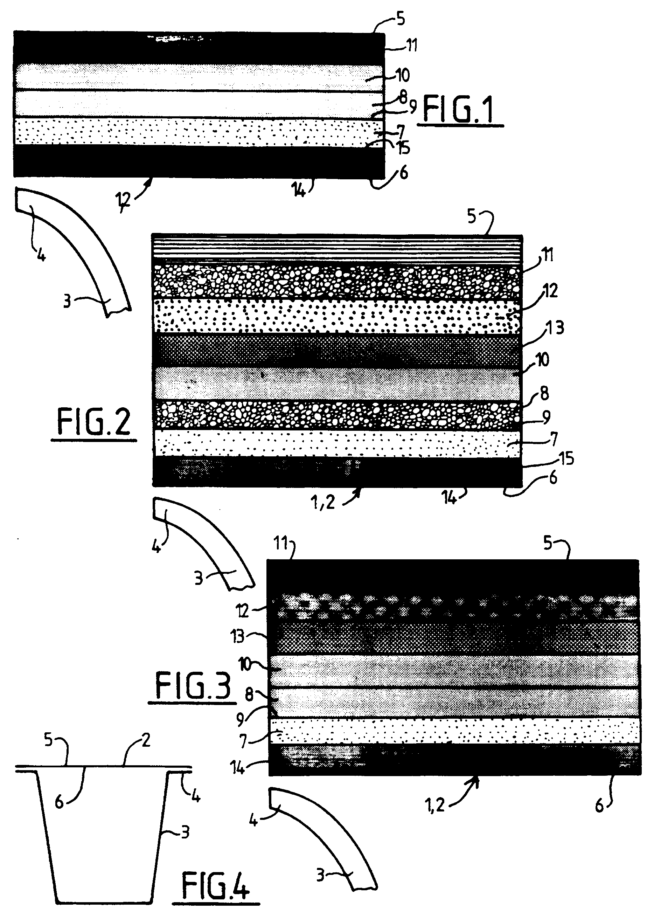

Dans la première variante (figure 1), la seconde couche d'encres et vernis 11 est en contact direct sur la couche de métal 10 tandis que dans la seconde et dans la troisième variantes (figures 2 et 3), la seconde couche d'encres et vernis 11 est séparée de la couche de métal 10 par au moins une couche intermédiaire 12. Dans le cas de la deuxième variante (figure 2) la couche intermédiaire 12 est une feuille de papier tel qu'un papier kraft blanchi couché une face à 40g/m² tandis que dans le cas de la troisième variante (figure 3) une couche intermédiaire est un film en matière plastique notamment à polyester de 23µm (microns) ou encore un polypropylène coextrudé de 30µm.

Une telle couche intermédiaire 12 est associée à la couche de métal 10 par collage, contre-collage, au moyen d'une couche de colle 13.

Dans les trois variantes représentées sur les fibres, une couche de vernis 14 est associée au film polyester 7 au contact de sa seconde face 15. Cette couche de vernis 14 constitue la face intérieure ou verso 6 du film. Dans le cas d'un opercule 2 devant être associé à un récipient 3 par thermoscellage, le vernis de la couche de vernis 14 est de type thermoscellable sur la matière plastique correspondante du récipient 3 notamment le polystyrène, le PVC, le polypropylène, le polyester.

La première couche d'encres et de vernis 8 est déposée sur le film polyester 7 par héliogravure ou flexographie. La seconde couche d'encres et de vernis 11 est déposée au contact de la couche de métal 10 ou de la couche intermédiaire 12 par héliogravure.

La couche de métal 10 est déposée par métallisation sous vide.

Le vernis de la première ou de la seconde couche d'encres et de vernis 8, 11 est préférentiellement un vernis nitro-cellulosique. La colle de la couche de colle 13 est préférentiellement de type polyuréthanne à deux composants.

On se réfère maintenant plus spécifiquement à la figure 1 qui illustre une première variante de réalisation.

Dans cette variante, le film polyester transparent 7 a une épaisseur de l'ordre de 10 à 30µm. Des exemples typiques de réalisation mettent en oeuvre des films de 12 et 23µm.

Le vernis nitro-cellulosique de la première couche d'encres d'impression et de vernis 8 est déposé en à plat total sur les encres préalablement déposées, avec une densité de l'ordre du g/m². Ce vernis constitue un surlaquage protecteur qui permet de protéger les encres lors de l'opération de métallisation sous vide ultérieure. Il en résulte que la qualité des teintes est conservée pendant cette opération de métallisation.

La couche de métal 10 déposée est de l'ordre de 250Å (Angtröms). Cette couche donne d'une part un aspect métallisé et, d'autre part, constitue un écran totalement opaque permettant d'avoir sur les deux faces extérieure et intérieure 5, 6 des impressions différentes. Le vernis nitro-cellulosique de la seconde couche d'encres et vernis 11 est déposée à raison de quelques grammes/m² (par exemple de l'ordre de 3g/m²). Le vernis de la couche de vernis 14 peut être composé de résines vinyliques et acryliques et il est déposé à raison de 2 à 5g/m².

On se réfère maintenant à la figure 2 qui illustre la deuxième variante.

A partir de la structure comprenant le film polyester 7, la première couche d'encres et vernis 8 et la couche de métal 10, on assure le contre-collage au moyen de la couche de colle 13 d'une feuille de papier kraft 12. la seconde couche d'encres et de vernis 11 est déposée sur la feuille de papier 12 à raison de quelques grammes/m² (par exemple 3g/m²). Ensuite, la couche de vernis 14 est déposée à raison de quelques grammes/m² (par exemple de l'ordre de 2 à 5g/m²).

La structure de la troisième variante (figure 3) est semblable et dérivée de celle de la seconde variante, la feuille de papier étant remplacée par un film plastique polyester pouvant avoir une épaisseur de l'ordre d'une vingtaine de microns. Ou, en sous-variante, la feuille de papier peut être remplacée par un film polypropylène coextrudé d'une épaisseur de l'ordre de 30µm.

L'invention concerne également les procédés de réalisation de tels films d'emballage.

Dans le cas du film de la première variante (figure 1), le procédé comporte les étapes successives consistant à imprimer le film polyester 7 avec d'abord de l'encre puis, sur l'encre, avec le vernis protecteur et cela par héliogravure ou flexographie ; puis à déposer sur la première couche d'encres et de vernis 8 ainsi réalisée la couche de métal 10 par métallisation sous vide ; puis à imprimer la couche de métal 10 avec de l'encre puis à déposer sur l'encre le vernis protecteur par héliogravure afin de réaliser la seconde couche d'encres et de vernis 11.

Le surlaquage protecteur par le vernis nitro-cellulosique en ce qui concerne la couche 8 est réalisé en ligne avec l'impression hélio ou flexo des encres de cette même couche 8. La métallisation sous vide permettant de réaliser la couche de métal 10 est réalisée directement sur la face préalablement imprimée. Elle est donc en contact avec la première couche d'encres et de vernis 8. L'impression d'encres et le dépôt de vernis permettant de constituer la seconde couche d'encres et de vernis 11 sont réalisés ultérieurement par héliogravure sur la face métallisée libre de la couche de métal 10, généralement simultanément.

Le procédé comporte également une étape ultérieure de dépôt sur le film polyester 7 (sa seconde face 15) de la couche 14 de vernis, par héliogravure également.

Un tel film est destiné à être stocké, transporté, livré et utilisé sous forme de bobine et, pour cette raison, le procédé comporte également une étape de rebobinage du film préalablement réalisé.

Les films selon la deuxième et la troisième variante (figures 2 et 3) sont réalisés par le même procédé mettant en oeuvre soit une feuille de papier, soit un film plastique. Ce procédé est dérivé du procédé permettant la réalisation du film selon la première variante, déjà décrit. On part en effet de la structure comportant le film polyester 7, la première couche d'encres et de vernis 8 et la couche de métal 10. Puis, on effectue le contre-collage de la couche intermédiaire 12 (feuille de papier ou film plastique). Ce collage met en oeuvre de la colle polyuréthanne à deux composants et une machine de complexage.

C'est le complexe ainsi réalisé qui est imprimé par héliogravure sur la face libre de la couche intermédiaire 12 et, en ligne avec cette impression est déposée la couche de vernis 14. Comme précédemment, le film peut être ultérieurement rebobiné.

Le procédé selon l'invention met en oeuvre quatre techniques : l'héliogravure, la flexographie, la métallisation sous vide et le complexage.

Dans la technique d'héliogravure, un cylindre gravé est recouvert d'encre. Puis, le cylindre est entraîné en rotation et l'encre en excès est éliminée par une racle en appui sur le cylindre. L'encre contenue dans les alvéoles du cylindre est reportée, par pression, sur le support à imprimer. Après l'impression de chaque couleur, le support est séché par chauffage et pulsation d'air et peut alors recevoir une nouvelle couleur au poste ultérieur de la machine hélio. Sept couleurs peuvent ainsi être imprimées en ligne sur la même machine.

Dans la technique de flexographie, il y a impression par contact à l'aide d'une forme d'impression flexible. Une machine classique pour la mise en oeuvre de cette technique comporte un cylindre barboteur, un cylindre toucheur et un cylindre porte-cliché, par couleur. La machine comporte également une râcle et un cylindre de contre-pression commun à toutes les couleurs dans le cas d'une machine à tambour central. Une telle machine permet l'impression de quatre couleurs sur les machines à tambour central classiques ou six couleurs dans le cas de machines aménagées. Le cylindre toucheur permet d'apporter l'encre au cliché flexographique sous la forme d'un film mince, d'épaisseur parfaitement uniforme. La forme des alvéoles, la linéature et l'orientation de la linéature sont choisies par l'imprimeur selon la trame du sujet à imprimer. Les clichés sont généralement en caoutchouc ou photopolymères. Dans le premier cas, l'impression n'est pas tramée et destinée à des cartons ondulés tandis que dans le deuxième cas, les impressions sont fines et tramées et destinées à des films. Dans une machine à tambour central, le séchage est réalisé en plusieurs étapes : un séchage entre chaque couleur pour permettre de déposer la couleur suivante et un séchage final "à coeur".

La technique de métallisation sous vide consiste à évaporer un métal qui, dans le cas considéré par l'invention est de l'aluminium, sur un support défilant en permanence au-dessus de la zone d'évaporation. Cette évaporation a lieu sous vide. Les sources d'évaporation sont alimentées en permanence par le matériau devant être déposé. Le métal se condense sur le matériau support pour former une couche de métal uniforme. L'énergie calorifique absorbée par le support est dissipée par contact avec un cylindre refroidisseur.

La technique de complexage est connue pour être d'usage courant pour la réalisation de films complexés. le complexage met en oeuvre une machine de complexage qui à l'une de ses extrémités reçoit une bobine de matière première. Cette matière première reçoit une enduction de colle solvant. Par ventilation d'air chaud, les solvants sont séchés. Puis, le support à complexer est appliqué par forte pression sur le support initial. En seconde partie extrême de la machine, le matériau ainsi contre-collé est embobiné.

## Revendications

1. Film d'emballage complexé imprimé, caractérisé par le fait qu'il comporte l'association :
- d'un film polyester transparent (7) ;
- d'une première couche d'encres d'impression et d'un vernis de protection (8) sur une première face (9) du film polyester (7) ;
- d'une couche continue de métal (10) sur la première couche d'encres d'impression (8) ;
- d'une seconde couche d'encres d'impression et d'un vernis de protection (11) sur la couche de métal (10) à l'opposé de la première couche d'encres d'impression et de vernis (8), le film ayant ainsi des impressions visibles au recto et verso.

2. Film selon la revendication 1, caractérisé par le fait que la première couche d'encres et vernis (8) est en contact sur le film polyester (7).

3. Film selon l'une quelconque des revendications 1 et 2, caractérisé par le fait que la couche de métal (10) est en contact sur la première couche d'encres et vernis (8).

4. Film selon l'une quelconque des revendications 1 à 3, caractérisé par le fait que la seconde couche d'encres et vernis (11) est en contact direct sur la couche de métal (10).

5. Film selon l'une quelconque des revendications 1 à 3, caractérisé par le fait que la seconde couche d'encres et vernis (11) est séparée de la couche métal (10) par au moins une couche intermédiaire (12).

6. Film selon la revendication 5, caractérisé par le fait qu'une couche intermédiaire (12) est une feuille de papier.

7. Film selon la revendication 5, caractérisé par le fait qu'une couche intermédiaire (12) est un film en matière plastique.

8. Film selon l'une quelconque des revendications 5 à 7, caractérisé par le fait qu'une couche intermédiaire (12) est associée à la couche de métal (10) par collage, contre-collage, au moyen d'une couche de colle (13).

9. Film selon l'une quelconque des revendications 1 à 8, caractérisé par le fait qu'une couche de vernis (14) est associée au film polyester (7) au contact de sa seconde face (15).

10. Film selon l'une quelconque des revendications 1 à 9, caractérisé par le fait que la première couche d'encres et vernis (8) est déposée sur le film polyester (7) par héliogravure ou flexographie.

11. Film selon l'une quelconque des revendications 1 à 10, caractérisé par le fait que le vernis de la première et seconde couche d'encres et vernis est un vernis nitro-cellulosique.

12. Film selon l'une quelconque des revendications 1 à 11, caractérisé par le fait que la couche de métal (10) est déposée par métallisation sous vide.

13. Film selon la revendication 8, caractérisé par le fait que la colle de la couche de colle (13) est de type polyuréthanne à deux composants.

14. Film selon l'une quelconque des revendications 1, 4 et 5, caractérisé par le fait que la seconde couche d'encres et vernis (11) est déposée sur la couche de métal (10) ou une couche intermédiaire (12) par héliogravure.

15. Film selon la revendication 9, caractérisé par le fait que le vernis de la couche de vernis (14) associée au film polyester (7) est de type thermoscellable sur polystyrène, PVC, polypropylène, polyester.

16. Film selon la revendication 1 caractérisé par le fait qu'il est constitué en outre d'une couche de vernis thermoscellable sur polystyrène, PVC, polypropylène, polyester associée à la seconde face du film polyester, la seconde couche d'encres et vernis étant en contact direct avec la couche de métal déposée par métallisation sous vide.

17. Film selon la revendication 1 caractérisé par le fait qu'il est constitué en outre d'une couche de vernis thermoscellable sur polystyrène, PVC, polypropylène, polyester associée à la seconde face du film polyester, la seconde couche d'encres et vernis étant associée à la couche de métal déposée par métallisation sous vide par une couche intermédiaire en papier ou en matière plastique au moyen d'une couche de colle.

18. Procédé de réalisation d'un film d'emballage complexé imprimé selon la revendication 1, caractérisé par les étapes successives suivantes :
- on imprime le film polyester (7) avec de l'encre puis on dépose sur l'encre le vernis protecteur par héliogravure ou flexographie ;
- on dépose la couche continue de métal (10) par métallisation sous vide sur l'encre et le vernis ;
- on imprime la couche de métal (10) avec de l'encore puis on dépose sur l'encre le vernis protecteur par héliogravure.

19. Procédé de réalisation d'un film d'emballage complexé imprimé selon la revendication 1 caractérisé par les étapes successives suivantes :
- on imprime le film polyester (7) avec de l'encre puis on dépose sur l'encre le vernis protecteur par héliogravure ou flexographie ;
- on dépose la couche continue de métal (10) par métallisation sous vide sur l'encre et le vernis ;
- on réalise un complexage par contre-collage avec une couche intermédiaire (12) ;
- on imprime la couche intermédiaire (12) avec de l'encre puis on dépose sur l'encre le vernis protecteur par héliogravure.

20. Procédé selon l'une quelconque des revendications 19 et 20, caractérisé par le fait qu'il comporte également une étape ultérieure de dépôt sur le film polyester (7) d'une couche de vernis (14) par héliogravure.

21. Procédé selon l'une quelconque des revendications 18 à 20, caractérisé par le fait qu'il comporte également une étape terminale de rebobinage du film (1) ainsi réalisé.

22. Opercule de fermeture de récipient, caractérisé par le fait qu'il est obtenu à partir d'un film d'emballage complexé (1) selon l'une quelconque des revendications 1 à 17.

23. Conteneur comportant un récipient (3) tel qu'un pot ou une barquette en matière plastique et un opercule de fermeture (2) associé au récipient (3) selon la revendication 22.

24. Conteneur selon la revendication 23, caractérisé par le fait que l'opercule (2) est thermoscellé au récipient (3).

25. Conteneur selon l'une quelconque des revendications 23 et 24, caractérisé par le fait que l'opercule (2)comporte des impressions visibles à l'extérieur et à l'intérieur.

## Claims

1. Complex printed packaging film, characterised in that it comprises a combination of:
a transparent polyester film (7);
a first layer of printing inks and a protective varnish (8) on a first side (9) of the polyester film (7);
a continuous layer of metal (10) on the first layer of printing inks (8);
a second layer of printing inks and a protective varnish (11) on the layer of metal (10) opposite the first layer of printing inks and varnish (8),
the film thus bearing print which is visible on the front and reverse sides.

2. Film according to claim 1, characterised in that the first layer of ink and varnish (8) is in contact with the polyester film (7).

3. Film according to any one of claims 1 and 2, characterised in that the layer of metal (10) is in contact with the first layer of inks and varnish (8).

4. Film according to any one of claims 1 to 3, characterised in that the second layer of inks and varnish (11) is in direct contact with the layer of metal (10).

5. Film according to any one of claims 1 to 3, characterised in that the second layer of inks and varnish (11) is separated from the layer of metal (10) by at least one intermediate layer (12).

6. Film according to claim 5, characterised in that one intermediate layer (12) is a sheet of paper.

7. Film according to claim 5, characterised in that one intermediate layer (12) is a plastics film.

8. Film according to any one of claims 5 to 7, characterised in that one intermediate layer (12) is associated with the layer of metal (10) by bonding or counter-bonding, by means of a layer of adhesive (13).

9. Film according to any one of claims 1 to 8, characterised in that a layer of varnish (14) is associated with the polyester film (7) in contact with its second side (15).

10. Film according to any one of claims 1 to 9, characterised in that the first layer of inks and varnish (8) is deposited on the polyester film (7) by photogravure or flexography.

11. Film according to any one of claims 1 to 10, characterised in that the varnish of the first and second layers of inks and varnish is a nitrocellulose varnish.

12. Film according to any one of claims 1 to 11, characterised in that the layer of metal (10) is deposited by vacuum deposition.

13. Film according to claim 8, characterised in that the adhesive in the layer of adhesive (13) is of the two-component polyurethane type.

14. Film according to any of claims 1, 4 and 5, characterised in that the second layer of inks and varnish (11) is deposited on the layer of metal (10) or an intermediate layer (12) by photogravure.

15. Film according to claim 9, characterised in that the varnish in the layer of varnish (14) associated with the polyester film (7) is of the type which is heat-sealable to polystyrene, PVC, polypropylene or polyester.

16. Film according to claim 1, characterised in that it further consists of a layer of varnish which is heat-sealable to polystyrene, PVC, polypropylene or polyester associated with the second side of the polyester film, the second layer of inks and varnish being in direct contact with the layer of metal deposited by vacuum deposition.

17. Film according to claim 1, characterised in that it further consists of a layer of varnish which is heat-sealable to polystyrene, PVC, polypropylene, polyester associated with the second side of the polyester film, the second layer of inks and varnishes being associated with the layer of metal deposited by vacuum deposition by an intermediate layer of paper or plastics by means of a layer of adhesive.

18. Process for producing a complex printed packaging film according to claim 1, characterised by the following successive steps:
the polyester film (7) is printed with ink, then the protective varnish is deposited on the ink by photogravure or flexography;
the continuous layer of metal (10) is deposited on the ink and varnish by vacuum deposition;
the layer of metal (10) is printed with ink, then the protective varnish is deposited on the ink by photogravure.

19. Process for producing a complex printed packaging film according to claim 1, characterised by the following successive steps:
the polyester film (7) is printed with ink, then the protective varnish is deposited on the ink by photogravure or flexography;
the continuous layer of metal (10) is deposited on the ink and varnish by vacuum deposition;
complexing is carried out by counter-bonding to an intermediate layer (12);
the intermediate layer (12) is printed with ink, then the protective varnish is deposited on the ink by photogravure.

20. Process according to either of claims 19 and 20, characterised in that it also comprises a subsequent step of depositing a layer of varnish (14) on the polyester film (7) by photogravure.

21. Process according to any of claims 18 to 20, characterised in that it also comprises a final step of rewinding the film (1) thus produced.

22. Closure cover for a container, characterised in that it is made from a complex packaging film (1) according to any one of claims 1 to 17.

23. Container comprising a receptacle (3) such as a pot or tub made of plastics and a closure cover (2) associated with the receptacle (3) according to claim 22.

24. Container according to claim 23, characterised in that the cover (2) is heat-sealed to the receptacle (3).

25. Container according to any one of claims 23 and 24, characterised in that the cover (2) bears print which is visible on the outside and inside.

## Patentansprüche

1. Bedruckter Verpackungs-Verbundfilm, dadurch gekennzeichnet, daß er in Kombination enthält:
- einen transparenten Polyesterfilm (7);
- eine erste Druckfarben- und Schutzlack-Schicht (8) auf einer ersten Oberfläche (9) des Polyesterfilms (7);
- eine ununterbrochene Metallschicht (10) auf der ersten Druckfarben-Schicht (8);
- eine zweite Druckfarben- und Schutzlack-Schicht (11) auf der Metallschicht (10) entgegengesetzt zur ersten Druckfarben- und Lack-Schicht (8),
so daß der Film auf der Vorderseite und auf der Rückseite sichtbare Aufdrucke aufweist.

2. Film nach Anspruch 1, dadurch gekennzeichnet, daß die erste Druckfarben- und Lack-Schicht (8) mit dem Polyesterfilm (7) in Kontakt steht.

3. Film nach einem der Ansprüche 1 und 2 dadurch gekennzeichnet, daß die Metallschicht (10) mit der ersten Druckfarben- und Lack-Schicht (8) in Kontakt steht.

4. Film nach einem der Ansprüche 1 bis 3, dadurch gekennzeichnet, daß die zweite Druckfarben- und Lack-Schicht (11) direkt mit der Metallschicht (10) in Kontakt steht.

5. Film nach einem der Ansprüche 1 bis 3, dadurch gekennzeichnet, daß die zweite Druckfarben- und Lack-Schicht (11) durch mindestens eine Zwischenschicht (12) von der Metallschicht (10) getrennt ist.

6. Film nach Anspruch 5, dadurch gekennzeichnet, daß eine Zwischenschicht (12) ein Blatt Papier ist.

7. Film nach Anspruch 5, dadurch gekennzeichnet, daß eine Zwischenschicht (12) ein Kunststoffilm ist.

8. Film nach einem der Ansprüche 5 bis 7, dadurch gekennzeichnet, daß eine Zwischenschicht (12) durch Verklebung, Kaschierung oder mittels einer Klebstoffschicht (13) mit der Metallschicht (10) verbunden ist.

9. Film nach einem der Ansprüche 1 bis 8, dadurch gekennzeichnet, daß eine Lackschicht (14) mit dem Polyesterfilm (7) im Kontakt mit seiner zweiten Oberfläche (15) verbunden ist.

10. Film nach einem der Ansprüche 1 bis 9, dadurch gekennzeichnet, daß die erste Druckfarben- und Lack-Schicht (8) durch Heliogravüre oder Flexographie auf den Polyesterfilm (7) aufgebracht worden ist.

11. Film nach einem der Ansprüche 1 bis 10, dadurch gekennzeichnet, daß der Lack der ersten und zweiten Druckfarben- und Lack-Schichten ein Nitrocelluloselack ist.

12. Film nach einem der Ansprüche 1 bis 11, dadurch gekennzeichnet, daß die Metallschicht (10) durch Metallisierung unter Vakuum abgeschieden worden ist.

13. Film nach Anspruch 8, dadurch gekennzeichnet, daß der Klebstoff der Klebstoffschicht (13) ein solcher vom Zwei-Kömponenten-Polyurethan-Typ ist.

14. Film nach einem der Ansprüche 1, 4 und 5, dadurch gekennzeichnet, daß die zweite Druckfarben- und Lack-Schicht (11) auf die Metallschicht (10) oder eine Zwischenschicht (12) durch Heliogravüre aufgebracht worden ist.

15. Film nach Anspruch 9, dadurch gekennzeichnet, daß der Lack der Lackschicht (14), die mit dem Polyesterfilm (7) verbunden ist, ein solcher ist, der thermisch auf Polystyrol-, PVC-, Polypropylen-, Polyester, aufsiegelbar (aufgießbar) ist.

16. Film nach Anspruch 1, dadurch gekennzeichnet, daß er außerdem besteht aus einer auf Polystyrol, PVC, Polypropylen, Polyester thermisch aufsiegelbaren (gießbaren) Lackschicht, die mit der zweiten Oberfläche des Polyesterfilms verbunden ist, wobei die zweite Druckfarben- und Lack-Schicht in direktem Kontakt mit der durch Metallisierung unter Vakuum abgeschiedenen Metallschicht steht.

17. Film nach Anspruch 1, dadurch gekennzeichnet, daß er außerdem besteht aus einer auf Polystyrol, PVC, Polypropylen, Polyester thermisch aufsiegelbaren Lackschicht, die mit der zweiten Oberfläche des Polyesterfilms verbunden ist, wobei die zweite Druckfarben- und Lack-Schicht über eine Zwischenschicht aus Papier oder aus einem Kunststoffmaterial mittels einer Klebstoffschicht mit der durch Metallisierung unter Vakuum abgeschiedenen Metallschicht verbunden ist.

18. Verfahren zur Herstellung eines bedruckten Verpackungs-Verbundfilms nach Anspruch 1, gekennzeichnet durch die folgenden aufeinanderfolgenden Stufen:
- Bedrucken des Polyesterfilms (7) mit Druckfarbe, dann Abscheidung des Schutzlacks mittels Heliogravüre oder Flexographie auf der Druckfarbe;
- Abscheidung der ununterbrochenen Metallschicht (10) durch Metallisierung unter Vakuum auf der Druckfarbe und dem Lack;
- Bedrucken der Metallschicht (10) mit Druckfarbe und anschließende Abscheidung des Schutzlackes mittels Heliogravüre auf der Druckfarbe.

19. Verfahren zur Herstellung eines bedruckten Verpackungs-Verbundfilms nach Anspruch 1, gekennzeichnet durch die folgenden aufeinanderfolgenden Stufen:
- Bedrucken des Polyesterfilms (7) mit der Druckfarbe und anschließende Abscheidung des Schutzlacks mittels Heliogravüre oder Flexographie auf der Druckfarbe;
- Abscheidung der ununterbrochenen Metallschicht (10) durch Metallisierung unter Vakuum auf der Druckfarbe und dem Lack;
- Herstellung eines Verbundes durch Kaschieren mit einer Zwischenschicht (12); und
- Bedrucken der Zwischenschicht (12) mit Druckfarbe und anschließende Abscheidung des Schutzlackes mittels Heliogravüre auf der Druckfarbe.

20. Verfahren nach einem der Ansprüche 18 und 19, dadurch gekennzeichnet, daß es außerdem eine abschließende Stufe der Abscheidung einer Lackschicht (14) mittels Heliogravüre auf dem Polyesterfilm (7) umfaßt.

21. Verfahren nach einem der Ansprüche 18 bis 20, dadurch gekennzeichnet, daß es außerdem eine terminale Wiederaufwicklungsstufe des so hergestellten Films (1) umfaßt.

22. Deckel zum Verschließen eines Behälters, dadurch gekennzeichnet, daß er hergestellt wurde aus einem Verpackungs-Verbundfilm (1) nach einem der Ansprüche 1 bis 17.

23. Behälter, der umfaßt ein Gefäß (3), beispielsweise einen Topf oder ein Schiffchen, aus einem Kunststoffmaterial und einen Verschlußdeckel (2), der mit dem Gefäß (3) nach Anspruch 22 verbunden ist.

24. Behälter nach Anspruch 23, dadurch gekennzeichnet, daß der Deckel (2) mit dem Gefäß (3) wärmeversiegelt ist.

25. Behälter nach einem der Ansprüche 23 und 24, dadurch gekennzeichnet, daß der Deckel (2) außen und innen sichtbare Aufdrucke aufweist.
